# EUROPÄISCHE PATENTSCHRIFT

(11) **EP 2 266 192 B1**
(45) Veröffentlichungstag und Bekanntmachung des Hinweises auf die Patenterteilung: **11.12.2019**
(21) Anmeldenummer: 09776539.0
(22) Anmeldetag: 16.04.2009
(51) Int. Cl.: H02K 15/04, H02K 3/12

(54) **STATOR ODER ROTOR FÜR ELEKTRISCHE MASCHINEN UND VERFAHREN ZU SEINER HERSTELLUNG**
ROTOR OR STATOR FOR ELECTRICAL MACHINES AND METHOD FOR PRODUCTION THE SAME
ROTOR OU STATOR POUR MACHINES ÉLECTRIQUES ET SON PROCÉDÉ DE FABRICATION

(30) Priorität: 17.04.2008 DE 102008019479
(43) Veröffentlichungstag der Anmeldung: 29.12.2010
(73) Patentinhaber: ELMOTEC STATOMAT Holding GmbH, 61184 Karben (DE)
(72) Erfinder: SADIKU, Sadik, 63543 Neuberg 1 (DE); WITWER, Keith, A., Fort Wayne IN 46804 (US)
(74) Vertreter: Patentanwälte Olbricht Buchhold Keulertz
(86) Internationale Anmeldenummer: PCT/EP2009/002787
(87) Internationale Veröffentlichungsnummer: WO 2010/085986

(56) Entgegenhaltungen:
- EP-A1- 1 469 579
- EP-A2- 1 179 880
- US-A1- 2006 022 547
- US-A1- 2007 200 449
- US-B2- 6 750 581
- US-B2- 6 759 779
- US-B2- 6 826 823
- US-B2- 6 862 797
- US-B2- 7 281 312

## Beschreibung

Die Erfindung betrifft ein Verfahren zur Herstellung eines Stators oder Rotors für elektrische Maschinen mit einer verteilten Wellenwicklung, deren Drähte kontinuierlich wellenförmig zu in die Nuten des Stators bzw. Rotors eingeführten Stegen und jeweils zwei benachbarte Stege eines Drahts verbindenden, über eine Stirnfläche des Stators bzw. Rotors vorstehenden Wickelköpfen geformt sind, wobei die Wickelköpfe von jeweils zwei paarweise zugeordneten, mit benachbarten Stegen in denselben Nuten liegenden Drähten an entgegengesetzten Enden der Nuten über die Stirnflächen des Stators bzw. Rotors vorstehen.

Darüber hinaus betrifft die Neuerung einen zylindrischen Stator oder Rotor einer elektrischen Maschine nach dem Oberbegriff des Anspruches 7.

Die Erfindung geht aus von dem in der US 2006/0022547 A1 beschriebenen Verfahren und dem nach diesem Verfahren hergestellten Stator oder Rotor. Es sieht vor, dass eine verteilte Wellenwicklung aus zwei Gruppen bzw. Strängen von in sich verflochtenen, vorzugsweise rechteckigen Wicklungsdrähten zusammengesetzt wird, wobei jeder Strang durch Wickeln auf einer streifenförmig flachen Schablone, Überkreuzen der Drähte im Wickelkopfbereich und anschließendes Flachpressen erzeugt wird. Die beiden einschichtig flachgepreßten Wicklungshälften liegen am Ende in den Stator- oder Rotornuten in jeder Lage jeweils in einer bestimmten Ebene, sind also nicht miteinander verflochten. Die jeweils paarweise zugeordneten, in denselben Nuten liegenden Wicklungsdrähte der beiden Stränge sind nur durch Verlöten an einem Ende miteinander verbunden. Obgleich eine aus beiden übereinander liegenden Wicklungshälften gebildete Lage die Dicke der zweifachen Drahtstärke haben sollte, kreuzen an bestimmten Stellen drei Drähte in so dichtem Abstand, dass eine gewisse Ungleichmäßigkeit in der Dicke entsteht, die sich bei mehreren Lagen verstärkt.

Verteilte Wellenwicklungen, bei denen alle Wicklungsdrähte miteinander verflochten sind, sind in den US 6750581 B2, US 6759779 B2, US 6826823 B2 und US 6862797 B2 beschrieben. Ein Herstellungsverfahren ist nicht angegeben. Wenn sich, wie normalerweise angestrebt, die vorgefertigte Wellenwicklung mehrmals um den Umfang eines Stators oder Rotors erstrecken, 25 also mehrere Lagen bilden soll, muss jeweils an denjenigen Stellen, wo sich der Übergang von einer zur nächsten Lage befindet, eine Unregelmäßigkeit in den Wicklungsstrang eingearbeitet werden, so dass eine maschinelle Herstellung erschwert ist.

US 6,759,779 B2 beschreibt einen Anlasser für ein Kraftfahrzeug mit einer durchgehenden Drahtwicklung, wobei der Draht einen rechteckigen Querschnitt aufweist.

EP 1 179 880 A2 beschreibt einen Stator, wobei eine in den Stator eingebrachte Wicklung aufgetrennt und neu verbunden ist.

US 2007/0 200 449 A1 beschreibt eine Wicklung eines Stators, die nach dem Hairpin-Verfahren in den Stator eingebracht wird, wobei einzelne Elemente der Wicklung nach dem Einbringen miteinander verbunden werden.

Es ist aus der EP 1 469 579 A1 weiterhin bekannt, eine verteilte Wellenwicklung für einen Stator oder Rotor herzustellen, indem sämtliche Wicklungsdrähte, die eine zweischichtige Lage bilden, parallel zueinander in einem einzigen Wickelvorgang auf eine im Querschnitt sechseckige Schablone aufgewickelt werden, die zwei parallele, mit Quernuten versehene Seitenflächen hat, welche an beiden Längskanten durch giebeldachförmige Endflächen verbunden sind. Der Wickelvorgang schreitet insgesamt schraubenförmig längs der Schablone voran, allerdings beschränkt sich die Steigung auf die ungenuteten, giebeldachförmigen Endflächen, während sich die Wicklungsdrähte in den Nuten der parallelen Seitenflächen ohne Steigung quer zur Mittellängsachse der Schablone erstrecken. Bei jeder Windung der parallelen Wicklungsdrähte um die Schablone legt sich ein Teil der Drähte in Nuten, deren gegenüberliegende Nuten zuvor während derselben Umwindung belegt worden sind. Nachdem eine bestimmte Windungszahl erreicht worden ist, wird die mehrteilige Schablone im Querschnitt verkleinert und aus der gebildeten Spule herauszogen. Danach wird die im Querschnitt sechseckige Spule zweischichtig flachgepreßt, wobei die auf den beiden Seitenflächen der Schablone erzeugten Drahtstege gegeneinandergepreßt werden.

Bei dem zuletzt genannten Wickelverfahren werden die Drähte kontinuierlich mit konstanter Steigung auf die giebeldachförmigen Endflächen der Schablone gelegt. Wegen restlicher Eigenelastizität liegen sie dort aber nicht flach an, werden auch nicht von außen gegen diese Flächen angedrückt und nicht in Nuten gehalten. Die Biegung der Drähte um die die giebeldachförmigen Endflächen begrenzenden Kanten in Verbindung mit der Biegung zur Erzielung der axialen Steigung der Drahtwindungen bewirken eine Torsion der rechteckigen Drähte im gesamten Wickelkopfbereich, die sich in der Phase zwischen der Abnahme der Spule von der Schablone und dem Flachpressen schädlich auswirkt. Normalerweise müsste bei diesem bekannten Wickelverfahren die äußere Seitenfläche eines auf einer Seitenfläche der Schablone liegenden Drahtes auch über die gesamte Länge eines Wickelkopfs außen liegen. Die Torsionsspannung im Draht und die sich schräg zu seinen Längskanten erstreckenden Biegekanten bewirken jedoch eine Verdrehung um seine Längsachse und Krümmungen, so dass beim Flachpressen die übereinander liegenden oder einander kreuzenden Drahtabschnitte zum Teil mit ihren Seitenkanten statt mit den Seitenflächen gegeneinandergepreßt werden und auch der parallele Verlauf der Drähte eines Strangs im Wickelkopfbereich nicht gewährleistet ist.

Der Erfindung liegt daher die Aufgabe zugrunde, einen Stator oder Rotor der eingangs genannten Art mit einer insgesamt verflochtenen, verteilten Wellenwicklung mit gleichmäßigem Drahtverlauf und minimaler zweischichtiger Lagendicke auch in den Wickelköpfen sowie ein geeignetes Herstellungsverfahren für solch einen Stator oder Rotor zur Verfügung zu stellen.

Vorstehende Aufgabe wird verfahrensmäßig dadurch gelöst, dass zur Bildung von zwei zunächst in sich und dann miteinander verflochtenen Drahtsträngen jeweils
- mehrere Spulenwindungen gleichzeitig durch Aufwickeln von n von einem Drahtführer ausgespeisten, parallelen Drähten mit Zwischenabstand auf eine um ihre Längsachse drehbare, streifenförmige Schablone erzeugt werden, indem
- für einen Stator oder Rotor mit einer durch 2 n teilbaren Anzahl von mit der Wellenwicklung zu belegenden Nuten abwechselnd in einem Arbeitsschritt A aus jedem der parallelen Drähte auf der Schablone mit einem vorbestimmten Zwischenabstand entsprechend dem Abstand der Stator- bzw. Rotornuten jeweils ein Steg und ein durch Umbiegen gedoppelter Kopfabschnitt mit der Drahtlänge eines Wickelkopfs erzeugt werden und
- in einem Arbeitsschritt B die im Arbeitsschritt A gebildeten Stege unter Aufrechterhaltung ihres Zwischenabstands zusammen mit dem angrenzenden ersten Ende der jeweils zugehörenden Kopfabschnitte und der Drahtführer zusammen mit dem zweiten Ende dieser Kopfabschnitte relativ zueinander um das n-fache des vorbestimmten Zwischenabstands in einer vorbestimmten Richtung axial längs der Drehachse der Schablone verschoben und dadurch Wickelköpfe gebildet werden,
- bis nach mehrfacher Wiederholung der Arbeitsschritte A und B noch die Stege für die letzten n Stator- bzw. Rotornuten auf der Schablone erzeugt werden,
- und dann die zwei einzeln vorgefertigten, in sich verflochtenen Drahtstränge in einer axialen Relativstellung übereinander gewickelt werden, in der jeweils von entsprechenden Paralleldrähten auf entgegengesetzten Seiten der streifenförmigen Schablone erzeugte Stege zur Deckung gebracht und anschließend im aneinanderliegenden Zustand als eine insgesamt zusammenhängende Wellenwicklung in die Stator- bzw. Rotornuten in Richtung quer zu deren Längserstreckung eingeführt werden.

Die Erfindung bietet den Vorteil, dass die Wellenwicklung aus zwei einschichtig vorzufertigenden Drahtsträngen mit quer zum Strang versetzten Stegen zusammengesetzt und dabei mit allen Drähten verflochten werden kann. Die Wickelköpfe springen abwechselnd von einer radial inneren in eine äußere Schicht und zurück, liegen also schräg zur Umfangsrichtung des Stators oder Rotors. Dennoch werden die Drähte nur punktuell an den Übergängen von den Stegen in die Wickelköpfe und an deren Spitzen gebogen, und zwar vorzugsweise nur um sich längs des Strangs und quer dazu erstreckende Biegeachsen. Auf diese Weise können Rechteckdrähte auch in den Wickelköpfen gleichmäßig ausgerichtet werden, so dass sie nach der Montage mit gegenüberliegenden Seitenflächen nach radial außen und innen weisen. Die Verformung an der Spitze der Wickelköpfe, die dazu führt, dass in Draufsicht auf der einen Seite von der Spitze die eine Seitenfläche und auf der anderen Seite die gegenüberliegende Seitenfläche des Rechteckdrahtes die Außenfläche des Wickelkopfs bildet, ist so stark, dass der Draht plastisch verformt wird und danach seine Form beibehält.

In bevorzugter Ausgestaltung der Erfindung hat jeder der beiden jeweils in sich verflochtenen Drahtstränge zwei- bis fünfmal so viele Stege wie der Stator bzw. Rotor Nuten und die in sich und miteinander verflochtenen Drahtstränge sind zwischen den jeweils zweiten und vorletzten Stegen durchgehend derart geformt und zusammengefügt, dass sich die Wickelköpfe von zwei Drähten, die für dieselben Nuten bestimmt sind, jeweils beim Fortschreiten von einer zur nächsten Nut in der Projektion auf eine quer zur Längsrichtung der Nuten liegende Fläche kreuzen. Dieses Verfahren ist fertigungstechnisch günstig, weil die Wellenwicklung durchgehend gleichmäßig geformt werden kann, ohne die z.B. bei der US 6750581 B2 vorgesehene Diskontinuität am Übergang von einer zur nächsten zweischichtigen Lage.

Normalerweise wird man jeden in sich verflochtenen Drahtstrang mit n Drähten einzeln flachpressen und dann die beiden Drahtstränge übereinander wickeln. Es besteht aber auch die Möglichkeit, erst die beiden einzeln möglichst flach vorgefertigten Drahtstränge übereinander zu wickeln und sie dann in gegenseitiger Anlage flachzupressen.

Ein nach dem vorstehend geschilderten Verfahren hergestellter zylindrischer Stator oder Rotor ist in Anspruch 7 gekennzeichnet. Er zeichnet sich aus durch die im Kennzeichenteil dieses Anspruches angegebenen Merkmale.

Nachstehend wird ein Ausführungsbeispiel der Erfindung anhand der Zeichnung näher beschrieben. Es zeigen:
- Fig. 1: untereinander in Seitenansicht zwei einzeln vorgefertigte, wellenförmige, in sich verflochtene Drahtstränge, bestehend jeweils aus drei Drähten, für eine verteilte Wellenwicklung eines Stators mit 42 Nuten sowie eine Seitenansicht einer durch Verflechten der beiden Drahtstränge zusammengesetzten Wellenwicklung im flach ausgebreiteten Zustand;
- Fig. 2: eine Endansicht eines der Drahtstränge nach Fig. 1 in größerem Maßstab;
- Fig. 3: eine Seitenansicht eines Wickelkopfes eines der Drahtstränge nach Fig. 1 in stark vergrößertem Maßstab;
- Fig. 4: eine axiale Draufsicht auf einen Wickelkopf eines der Drahtstränge nach Fig. 1 nach der Einbringung in einen Stator in stark vergrößertem Maßstab;
- Fig. 5 und 6: Draufsichten auf die Stirnenden eines Stators mit 42 Nuten nach dem Einziehen eines von drei Drahtpaaren einer verteilten Wellenwicklung, die sich viermal um den Umfang erstreckt und dabei vier zweischichtige Lagen bildet;
- Fig. 7: ein Wickelschema einer dreilagigen verteilten Wellenwicklung eines Drahtpaares für einen Stator mit 42 Nuten in einer Abwicklung, und
- Fig. 8: das Wickelschema der verteilten Wellenwicklung gemäß Fig. 7 nach dem Einbringen in drei zweischichtigen Lagen in einen Stator.

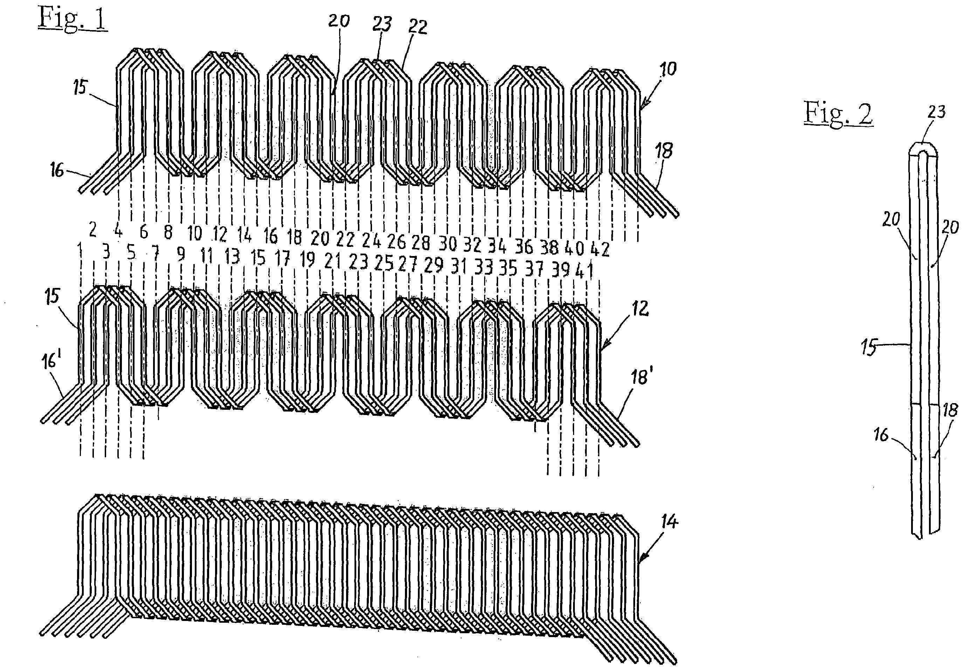

Wie in Fig. 1 dargestellt, werden zunächst zwei aus mehreren miteinander verflochtenen Paralleldrähten bestehende Drahtstränge 10 und 12 hergestellt, die dann zu einer insgesamt mit 14 bezeichneten Wellenwicklung zusammengefügt werden, die in einen Stator oder Rotor eingebracht wird.

Die beiden Drahtstränge 10 und 12 stimmen im Beispielsfall identisch überein, könnten aber auch unterschiedlich geformte Wickelköpfe haben. Sie bestehend jeweils aus drei parallelen Drähten 15, deren Anfang mit 16 bzw. 16' und deren Ende mit 18 bzw. 18' bezeichnet ist. In jedem der beiden Drahtstränge 10, 12 erstrecken sich die drei Drähte 15 wellenförmig zwischen ihrem Anfang und ihrem Ende und bilden dabei in die Stator- bzw. Rotornuten einzuführende, gerade Stege 20 und Wickelköpfe 22, welche zwei benachbarte Stege 20 desselben Drahts an den Enden verbinden. Im fertigen Zustand eines Stators stehen die Wickelköpfe 22 über die Stirnseiten des Statorblechpakets vor.

Der Drahtstrang 10 bzw. 12 wird wellenförmig geformt, indem die drei Drähte 15, wie in der US 2006/0022547 A1 beschrieben, gleichzeitig, parallel nebeneinander auf eine rotierend antreibbare, flache bzw. streifenförmige Schablone, zu der auch zwei die Wickelköpfe 22 formende, zurückziehbare Bolzen gehören, aufgewickelt werden. Während der mit Unterbrechungen durchgeführten Wickelbewegung steht der Drahtführer relativ zur Schablone axial fest, aber jedes Mal, nachdem die Drähte 15 über einen der erwähnten Bolzen geführt und dadurch die Biegung an der Spitze von drei Wickelköpfen 22 geformt worden ist, werden der Drahtführer und die Schablone nach dem Zurückziehen des Bolzens relativ zueinander axial verschoben und dadurch die Schenkel der Wickelköpfe 22 auseinandergespreizt. Man erkennt anhand von Fig. 1, dass dabei in den Wickelköpfen die Schenkel in eine sich kreuzende Stellung gebracht werden. Wie weiterhin aus Fig. 1 erkennbar, überkreuzt in den oberen Wickelköpfen der erste Draht 15 die beiden anderen parallelen Drähte und der mittlere den dritten Draht.

In den unteren Wickelköpfen 22 ist es umgekehrt. Dort überkreuzt der dritte Draht 15 den ersten und zweiten, und der mittlere Draht überkreuzt den ersten. Auf diese Weise sind die drei Drähte 15 nach dem Abstreifen von der flachen Schablone miteinander verflochten und können als ein zusammenhängender Drahtstrang 10 bzw. 12 gehandhabt werden. Da die flache, sreifenförmige Schablone aus Festigkeitsgründen eine bestimmte Dicke hat und bei der gemäß US 2006/0022547 A1 herzustellenden Wellenwicklung alle Stege 20 eines Drahtstrangs 10 bzw. 12 in einer gemeinsamen flachen Ebene liegen sollen, um später in den radialen Nuten eines zylindrischen Stators oder Rotors auf demselben Radius zu liegen, werden die Drahtstränge 10, 12 in bekannter Weise nach der wellenförmigen Formung auf der Schablone möglichst weitgehend in eine gemeinsame Ebene flachgepreßt, was aber normalerweise nicht vollkommen gelingt, weil die Kreuzungsstellen der Drähte in den Wickelköpfen 22 diesem Bestreben entgegenstehen.

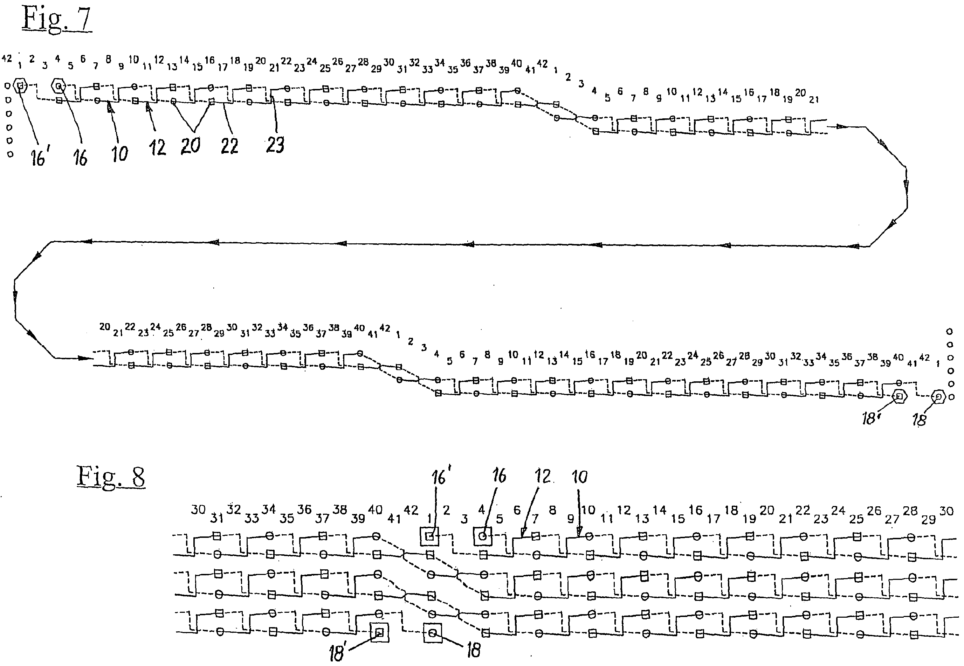

Während bei dem bekannten Verfahren gemäß US 2006/0022547 A1 die beiden flachgepreßten Drahtstränge 10 und 12 einfach nur mit dem gezeigten Versatz ihrer Anfänge 16, 16' und ihrer Enden 18, 18' in Längsrichtung übereinandergelegt und in dieser einfachen Schichtung in der Weise, wie z.B. in der US 7281312 B2 anhand der dortigen Fig. 8 bis 11 beschrieben, in einen Stator oder Rotor mit radial innen offenen Nuten eingeführt werden, unterscheidet sich die vorliegende Erfindung von diesem Stand der Technik dadurch, dass die Drahtstränge 10 und 12, normalerweise ebenfalls nach einem Flachpreßvorgang, in der in Fig. 1 gezeigten Relativstellung durch gegenseitiges Umwickeln miteinander verflochten werden, so dass die gesamte Wellenwicklung 14 ein in sich zusammenhängender Drahtstrang ist, der anschließend ebenfalls gemäß US 7281312 B2 in ein Statorblechpaket eingebracht werden kann. Das gegenseitige Umwinden der beiden Drahtstränge 10 und 12 ist erforderlich, um jeweils paarweise zugeordnete Stege 20 der Drahtstränge 10 und 12 zur Deckung zu bringen. So werden z. B. die in Fig. 1 - von links beginnend - ersten drei Stege 20 des Strangs 10, die auf der Rückseite der nicht gezeigten flachen Schablone geformt worden sind, mit dem vierten, fünften und sechsten Steg des Strangs 12 zur Deckung gebracht. Die drei zuletzt genannten Stege sind auf der Vorderseite der flachen Schablone geformt worden. Nachdem die Stege 4 bis 6 des Strangs 12 auf die Stege 1 bis 3 des Strangs 10 gelegt worden sind, muss durch einen Windeschritt der Strang 10 auf die Oberseite des Strangs 12 gebracht werden, um die Stege 4 bis 6 des Strangs 10 auf die Stege 7 bis 9 des Strangs 12 zu legen. Anschließend muss durch eine weitere Windebewegung, die sich von Hand sehr einfach ausführen lässt, aber auch mittels einer sehr flachen Schablone ausgeführt werden kann, der Strang 12 über den Strang 10 gebracht werden, um die auf der Vorderseite der Schablone geformten Stege 10 bis 12 des Strangs 12 auf die auf der Rückseite der Schablone geformten, von links gezählten Stege 7 bis 9 des Strangs 10 zu legen. Es ist leicht einzusehen, dass sich nach Überlagerung aller Stege der Stränge 10 und 12 eine optimal dünne, zweischichtige Lage der Wellenwicklung 14 ergibt, wenn die gemäß Fig. 2 zunächst mit einem gewissen Zwischenabstand entsprechend der Dicke der Schablone geformten Stege 20 durch Flachpressen der Stränge 10 und 12 soweit angenähert werden, dass sie in der Endansicht gemäß Fig. 2 ohne Zwischenabstand unmittelbar nebeneinanderliegen. Im verflochtenen Zustand der beiden Stränge 10 und 12 ergibt sich dann eine zweischichtige Lage, die genau so dick ist wie zwei flach übereinanderliegende Drahtstege 20. Da sich die Wickelköpfe 22 schräg zwischen den beiden Schichten erstrecken, ist diese zweischichtige Lage auch im Bereich der Wickelköpfe nicht dicker.

Die als Ausführungsbeispiel gemäß Fig. 1 gewählte Wellenwicklung ist für einen Stator mit 42 Nuten bestimmt. Es versteht sich, dass nach demselben Herstellungsverfahren auch eine verteilte Wellenwicklung mit zwei Drahtsträngen mit jeweils nur zwei Drähten, aber auch mit z.B. vier bis acht oder noch mehr Drähten pro Strang hergestellt werden kann. Dabei empfiehlt es sich, wie in Fig. 1 gezeigt, die beiden Stränge 10 und 12 in Längsrichtung um die Zahl der Drähte versetzt zu überlagern und die Drahtenden 18 und 18' miteinander elektrisch zu verbinden, so dass der Strom in beiden in derselben Nut liegenden Stegen dieselbe Richtung hat und die Drahtanfänge 16 und 16' auf derselben Seite des Stators unmittelbar nebeneinander angeordnet sind.

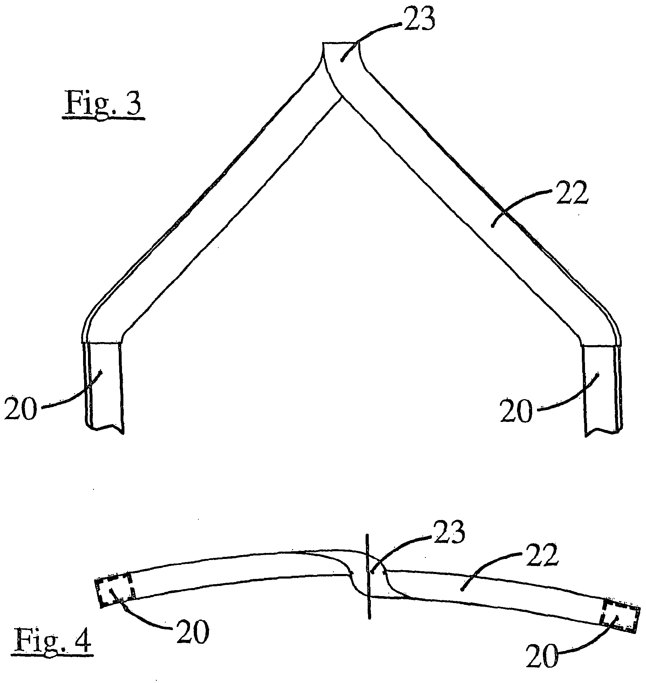

Fig. 3 und 4 zeigen einen Wickelkopf in Seitenansicht bzw. Draufsicht in größerem Maßstab. Man erkennt, dass der Draht 15 zunächst gegen sich selbst um 180° umgebogen worden ist. Danach wurden die beiden Schenkel des Wickelkopfs 22 gespreizt, so dass an der Umbiegestelle nun auch noch ein seitliches Abbiegen um eine im wesentlichen quer zu der ersten Biegeachse liegende Achse erfolgte. Die Biegevorgänge an der mit 23 bezeichneten Spitze der giebelförmigen Wickelköpfe haben eine so starke plastische Verformung zur Folge, dass danach die erzielte Form erhalten bleibt. Im übrigen zeigt Fig. 4 deutlich, dass die so verformten Wickelköpfe 22 natürlicherweise ebenso wie die durch sie verbundenen Stege 20 in zwei unmittelbar benachbarten Schichten liegen. Der Übergang zwischen den beiden Schichten befindet sich an der Spitze 23 der Wickelköpfe 22.

Bei dem Ausführungsbeispiel nach Fig. 1 haben die Drahtstränge 10 und 12 sowie die daraus zusammengesetzte Wellenwicklung 14 nur so viele Stege, dass damit in einem Stator mit 42 Nuten nur eine einzige zweischichtige Lage hergestellt werden kann. Mit anderen Worten, jeder Draht 15 erstreckt sich nur einmal um den Umfang und in jeder Nut liegen nur zwei Stege.

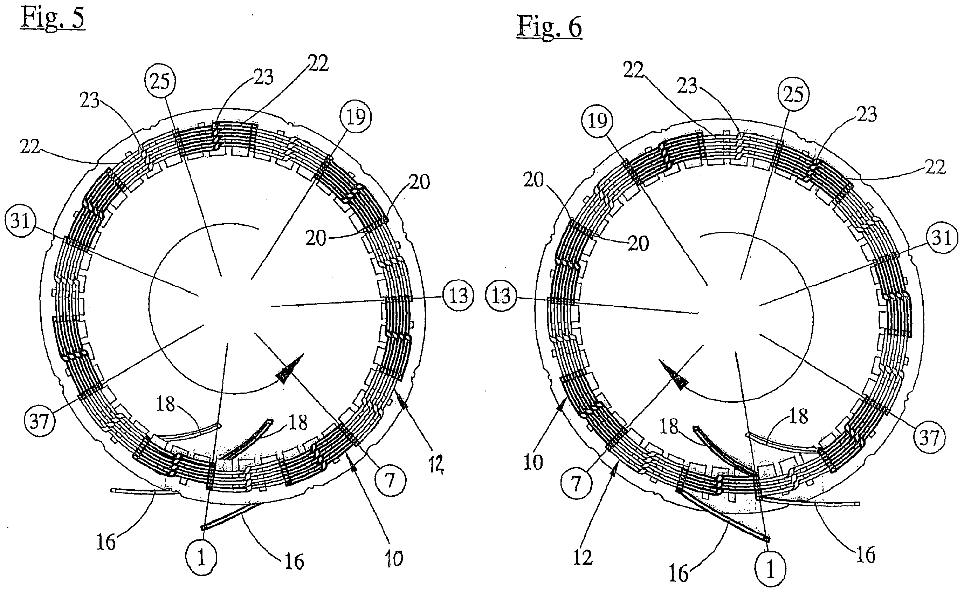

Die Fig. 5 bis 8 zeigen ergänzend eine vier- bzw. dreischichtige Wicklung für einen Stator mit ebenfalls 42 Nuten, wobei aus Gründen der Übersichtlichkeit nur ein einziges Drahtpaar gezeigt ist, das in den Nuten 1, 4, 7 37 und 40 liegt. Zur vollständigen verteilten Wellenwicklung gehören eigentlich noch ein zweites Drahtpaar, das in den Nuten 2, 5, 8 ... 38 und 41 liegt sowie ein drittes Drahtpaar, das in den Nuten 3, 6, 9 ... 39 und 42 liegt. Aus der Gegenüberstellung der beiden Stirnansichten des Stators gemäß Fig. 5 und 6 geht hervor, dass jeweils auf denjenigen Umfangsabschnitten, wo sich an dem einen Ende des Stators die Wickelköpfe des einen Drahtes befinden, der andere Draht seine Wickelköpfe am anderen Ende des Stators hat. Die Drahtanfänge 16 und 16' treten radial außen aus den Nuten 1 und 4 heraus. Die Drahtenden 18 und 18' ragen radial innen aus den Nuten 1 bzw. 40 hervor und befinden sich an demselben axialen Ende des Stators wie die Drahtanfänge 16, 16'. Sie haben einen kurzen Umfangsabstand und können daher leicht elektrisch miteinander verbunden werden, so dass man im fertigen Zustand für jedes einander zugeordnete Drahtpaar nur zwei Anschlüsse braucht.

Die Fig. 5 und 6 zeigen bereits die gleichmäßige Form der Wickelköpfe in allen Lagen über den gesamten Umfang an beiden Enden des Stators. Diese Gleichmäßigkeit auch an den Übergängen von einer zur nächsten zweischichtigen Lage lässt sich anhand der Fig. 7 und 8 erklären. Fig. 7 zeigt eine Abwicklung bzw. den gestreckten Ausgangszustand einer erfindungsgemäßen Wellenwicklung, bestehend hier nur aus einem einzigen Paar zugeordneter Drähte, also die Situation nach Fig. 5 und 6, wobei die Nummern der Nuten für drei Umläufe um den Umfang des Stators angegeben sind. Kleine Kreise symbolisieren Stege des Strangs 10 und kleine Quadrate Stege des Strangs 12. Man erkennt, dass zwischen den Nuten 4 und 7 eine durchgezogene Linie die mit einem Quadrat gekennzeichneten Stege des Strangs 12 verbindet. Das sind mit Blick auf die in Fig. 6 gezeigte Stirnseite des Stators die mit dünnen Linien gezeichneten Wickelköpfe zwischen den Nuten 4 und 7. Gleichzeitig verbindet in Fig. 7 eine gestrichelte Linie die mit kleinen Kreisen gekennzeichneten Stege des nur durch einen Einzeldraht dargestellten Strangs 10. Damit sind die mit Blick auf die in Fig. 6 gezeigte Stirnseite des Stators unsichtbaren Wickelköpfe an dessen anderen Ende kenntlich gemacht. Dementsprechend sieht man in Fig. 5 zwischen den Nuten 4 und 7 die mit dickeren Linien gezeichneten Wickelköpfe des Strangs 10.

Somit stellen die Fig. 7 und 8 Abwicklungen von Projektionen der an den entgegengesetzten Enden des Stators vorhandenen Wickelköpfe auf eine Querebene der Mittellängsachse des Stators dar, wobei die durchgezogenen Linien die Wickelköpfe auf der für den Betrachter sichtbaren Anschlußseite des Stators gemäß Fig. 6 und die gestrichelten Linien die für den Betrachter unsichtbaren Wickelköpfe auf der entgegengesetzten Statorstirnseite symbolisieren. Man erkennt sowohl in der Abwicklung von drei zweischichtigen Lagen gemäß Fig. 7 als auch in der Darstellung nach Fig. 8, wo die drei zweischichtigen Lagen übereinander dargestellt sind, dass sich die durchgezogenen und gestrichelten Linien abwechseln und kreuzen. Dabei ist besonders hervorzuheben, dass sich auch dort, wo sich die Übergänge von der ersten zur zweiten Lage und von der zweiten zur dritten Lage befinden, die durchgezogenen und die gestrichelten Linien, welche die Wickelköpfe an axial entgegengesetzten Umfangsabschnitten des Stators symbolisieren, ganz regelmäßig kreuzen und abwechseln, nicht anders als auch in anderen Umfangsabschnitten. Die Gleichmäßigkeit des Wickelschemas nach Fig. 7 und 8 stellt eine Bestätigung dafür dar, dass mit gleichmäßig gewellten sowie gleichmäßig in sich und miteinander verflochtenen Drahtsträngen 10, 12, unabhängig von der Zahl der Drähte und der Zahl der Nuten, wenn letztere durch die verdoppelte Zahl der Drähte teilbar ist, ein sehr gleichmäßig bewickelter Stator oder Rotor gemäß Fig. 5 und 6 erzeugt werden kann.

Genauso wichtig wie die Gleichmäßigkeit des Wickelschemas nach Fig. 7 und 8 ist für die Praxis die Genauigkeit der Formung und Verlegung der Drähte, so dass diese sich nur an den vorbestimmten Stellen kreuzen und mit ihrem rechteckigen Querschnitt gleichmäßig ausgerichtet sind, sich also flächig, nicht verkantet gegeneinanderlegen. Dieses lässt sich mit dem vorgeschlagenen Herstellungsverfahren mit zwei einzeln vorgefertigten, einschichtigen Drahtsträngen 10, 12 erreichen, in denen dank der beschriebenen Formung der Spitzen 23 der Wickelköpfe 22 sowohl diese als auch die Stege 20 mit gleichmäßiger Ausrichtung der Seitenkanten der Drähte 15 erzeugt werden können. Es ist anschließend unproblematisch, die auf die se Weise genau ausgerichteten Stege und Wickelköpfe der beiden Drahtstränge 10, 12 miteinander verflochten übereinanderzulegen und dann unter Aufrechterhaltung der gleichmäßigen Ausrichtung der Drähte in radial außen oder innen offenen Nuten eines Stators oder Rotors einzuführen. Dabei kann es sich z.B. auch um einen Stator oder Rotor eines elektrischen Linearmotors handeln.

## Patentansprüche

1. Verfahren zur Herstellung eines Stators oder Rotors für elektrische Maschinen mit einer verteilten Wellenwicklung, deren Drähte (15) kontinuierlich wellenförmig zu in die Nuten des Stators bzw. Rotors eingeführten Stegen (20) und jeweils zwei benachbarte Stege (20) eines Drahts (15) verbindenden, über eine Stirnfläche des Stators bzw. Rotors vorstehenden Wickelköpfen (22) geformt sind, wobei die Wickelköpfe (22) von jeweils zwei paarweise zugeordneten, mit benachbarten Stegen (20) in denselben Nuten liegenden Drähten (15) an entgegengesetzten Enden der Nuten über die Stirnflächen des Stators bzw. Rotors vorstehen, **dadurch gekennzeichnet, dass** zur Bildung von zwei zunächst in sich und dann miteinander verflochtenen Drahtsträngen (10, 12) jeweils
- mehrere Spulenwindungen gleichzeitig durch Aufwickeln von n von einem Drahtführer ausgespeisten, parallelen Drähten (15) mit Zwischenabstand auf eine um ihre Längsachse drehbare, streifenförmige Schablone erzeugt werden, indem
- für einen Stator oder Rotor mit einer durch 2 n teilbaren Anzahl von mit der Wellenwicklung zu belegenden Nuten abwechselnd in einem Arbeitsschritt A aus jedem der parallelen Drähte (15) auf der Schablone mit einem vorbestimmten Zwischenabstand entsprechend dem Abstand der Stator- bzw. Rotornuten jeweils ein Steg (20) und ein durch Umbiegen gedoppelter Kopfabschnitt mit der Drahtlänge eines Wickelkopfs (22) erzeugt werden und
- in einem Arbeitsschritt B die im Arbeitsschritt A gebildeten Stege (20) unter Aufrechterhaltung ihres Zwischenabstands zusammen mit dem angrenzenden ersten Ende der jeweils zugehörenden Kopfabschnitte und der Drahtführer zusammen mit dem zweiten Ende dieser Kopfabschnitte relativ zueinander um das n-fache des vorbestimmten Zwischenabstands in einer vorbestimmten Richtung axial längs der Drehachse der Schablone verschoben und dadurch Wickelköpfe (22) gebildet werden,
- bis nach mehrfacher Wiederholung der Arbeitsschritte A und B noch die Stege (20) für die letzten n Stator- bzw. Rotornuten auf der Schablone erzeugt werden,
- und dann die zwei einzeln vorgefertigten, in sich verflochtenen Drahtstränge (10, 12) in einer axialen Relativstellung übereinander gewickelt werden, in der jeweils von entsprechenden Paralleldrähten (15) auf entgegengesetzten Seiten der streifenförmigen Schablone erzeugte Stege (20) zur Deckung gebracht und anschließend im aneinanderliegenden Zustand als eine insgesamt zusammenhängende Wellenwicklung (14) in die Stator- bzw. Rotornuten in Richtung quer zu deren Längserstreckung eingeführt werden.

2. Verfahren nach Anspruch 1, **dadurch gekennzeichnet, dass** jeder der beiden jeweils in sich verflochtenen Drahtstränge (10, 12) zwei- bis fünfmal so viele Stege (20) wie der Stator bzw. Rotor Nuten hat und die in sich und miteinander verflochtenen Drahtstränge (10, 12) zwischen den jeweils zweiten und vorletzten Stegen (20) durchgehend derart geformt und zusammengefügt sind, dass sich die Wickelköpfe (22) von zwei Drähten (15), die für dieselben Nuten bestimmt sind, jeweils beim Fortschreiten von einer zur nächsten Nut in der Projektion auf eine quer zur Längsrichtung der Nuten liegende Fläche kreuzen.

3. Verfahren nach Anspruch 1, **dadurch gekennzeichnet, dass** die in sich verflochtenen Drahtstränge (10, 12) einzeln oder nach ihrer Verwindung zur zusammenhängenden Wellenwicklung (14) flachgepresst werden.

4. Verfahren nach Anspruch 3, **dadurch gekennzeichnet, dass** die in sich verflochtenen Drahtstränge (10, 12) nur soweit flach zusammengepresst werden, dass in einer Endansicht der ausgestreckten Drahtstränge (10, 12) zwei durch einen Wickelkopf (22) verbundene Stege (20) ohne oder mit minimalem Zwischenabstand nebeneinander liegen.

5. Verfahren nach einem der Ansprüche 1 bis 4, **dadurch gekennzeichnet, dass** die Drahtstränge (10, 12) aus parallelen, gleichmäßig ausgerichteten Drähten (15) mit rechteckigem Querschnitt geformt und verflochten werden, wobei während des Arbeitsschritts A die Drähte (15) mit einer ihrer Seitenflächen auf die Schablone gelegt und um eine parallel zur Mittellängsachse der Schablone liegende, erste Biegeachse um 180° zu Kopfabschnitten gebogen werden und die dabei gebildeten Schenkel während des Arbeitsschritts B im Bereich dieser Biegung sowie an den Enden der Kopfabschnitte jeweils um quer zu der ersten Biegeachse liegende Biegeachsen derart gebogen werden, dass in der Seitenansicht der streifenförmigen Schablone giebelförmige Wickelköpfe (22) gebildet werden.

6. Verfahren nach Anspruch 5, **dadurch gekennzeichnet, dass** Rechteckdrähte (15) verwendet werden, deren in Längsrichtung der Schablone gemessene Breite unter Berücksichtigung von Nut- und/oder Drahtisolierungen und eines für das Einführen der Drähte (15) in die Nuten notwendigen Spiels so gewählt ist, dass sie zu der Nutbreite passt.

7. Zylindrischer Stator oder Rotor einer elektrischen Maschine mit Nuten, deren Breite für die Aufnahme einer einzigen Reihe von im Querschnitt rechteckigen, mit ihren radial inneren und äußeren Seitenflächen ausgerichteten Drahtstegen (20) ausgelegt ist, und mit einer verteilten Wellenwicklung (14), die zwei Stränge (10, 12) mit jeweils n kontinuierlich wellenförmig mit Stegen (20) und giebelförmigen Wickelköpfen (22) geformte, miteinander verflochtene Drähte (15) aufweist, wobei die Stränge (10, 12) der Wellenwicklung (14) Durchgehend gleichmäßig mit den jeweils n Drähten (15) mit den Stegen (20) und Wickelköpfen (22) durch Wickeln auf einer streifenförmig, flachen Schablone erzeugt worden sind und die Drähte (15) des einen Strangs (10) den Drähten (15) des anderen Strangs (12) jeweils paarweise derart zugeordnet sind, dass die beiden Drähte (15) jedes Paars in denselben Nuten liegen und ihre Wickelköpfe (22) entgegengesetzte Enden der in denselben Nuten liegenden, benachbarten Stege (20) verbinden, wobei die zwei Drahtstränge (10, 12) in einer Relativstellung umeinander gewickelt sind, in der die Stege (20) der paarweise zugeordneten Drähte (15) in den jeweils von ihnen belegten, aufeinanderfolgenden Nuten abwechselnd die radial äußere und die radial innere Stellung einnehmen, **dadurch gekennzeichnet, dass** die Drähte (15) an den Spitzen (23) der giebelförmigen Wickelköpfe (22) mit Bezug auf die Zylinderachse nach außen oder innen derart um 180° umgebogen sind, dass die Verformung an der Spitze der Wickelköpfe (22) so stark ist, dass der Draht plastisch verformt ist und nach dem Biegen seine Form beibehält, und zusätzlich die beiden Schenkel der Wickelköpfe (22) entsprechend ihrer Spreizung derart in entgegengesetzten Umfangsrichtungen abgebogen sind, dass gegenüberliegende Seitenflächen eines Drahtes (15) die axial äußere Fläche eines Wickelkopfes (22) bilden und in axialer Draufsicht auf einen Wickelkopf (22) die beiden angrenzenden Stege (20) in ihren jeweiligen Nuten radial unterschiedliche Stellungen einnehmen.

8. Rotor oder Stator nach Anspruch 7, **dadurch gekennzeichnet, dass** sich die paarweise zugeordneten Drähte (15) wenigstens zweimal um den Umfang eines Stators bzw. Rotors erstrecken und dabei in den Nuten, unmittelbar benachbart, mehr als eine zweischichtige Lage bilden, und dass auch im Bereich eines Übergangs von einer zur nächsten Lage die Stege (20) der beiden paarweise zugeordneten Drähte (15) in den aufeinander folgenden Nuten abwechselnd eine weiter innen und weiter außen liegende Stellung einnehmen, so dass sich die beiden Wickelköpfe (22), welche die gegenüberliegenden Enden der in zwei aufeinanderfolgenden Nuten liegenden Stege (20) verbinden, in einer Projektion auf eine quer zur Mittellängsachse des Stators bzw. Rotors liegenden Fläche kreuzen.

9. Stator oder Rotor nach Anspruch 7 oder 8, **dadurch gekennzeichnet, dass** die beiden Drahtstränge (10, 12) in der Länge und der Form der Wellen übereinstimmen und durch gegenseitiges Umwinden in derjenigen Relativstellung verflochten sind, in welcher die Enden der paarweise zugeordneten Drähte (15) auf derselben Stirnseite des Stators bzw. Rotors den kleinsten Abstand haben.

## Claims

1. Method for the production of a stator or rotor for electrical machines having a distributed wave winding, the wires (15) which are formed in a continuous wave shape to form webs (20) introduced into the grooves of the stator or rotor and winding heads (22) connecting respectively two adjacent webs (20) of a wire (15) and protruding beyond an end face of the stator or rotor, wherein the winding heads (22) protrude from respectively two wires (15), assigned in pairs situated with adjacent webs (20) in the same grooves, at opposite ends of the grooves beyond the end faces of the stator or rotor, **characterised in that** for the formation of two wire strands (10, 12) initially intertwined and then interwoven in each case
- several coil windings are generated simultaneously by winding up n parallel wires (15) fed out by a wire guide interspaced on a strip-shaped template rotatable about its longitudinal axis, **in that**
- for a stator or rotor having a number, divisible by 2 n, of grooves to be occupied with the wave winding, alternatingly in a work step A, from each of the parallel wires (15) on the template with a predetermined interspacing corresponding to the spacing of the stator or rotor grooves, in each case one web (20) and one head portion doubled by bending with the wire length of a winding head (22) are generated and
- in a work step B the webs (20) formed in work step A, maintaining their interspacing, together with the adjoining first end of the respectively assigned head portions, and the wire guide together with the second end of these head portions are slotted relatively to one another by a factor of n of the predetermined interspacing in a predetermined direction axially along the rotational axis of the template and thus winding heads (22) are formed,
- until, after multiple repetitions of the work steps A and B, also the webs (20) are generated for the last n stator-grooves or rotor-grooves on the template,
- and then the two individual prefabricated interwoven wire strands (10, 12) are wound over one another in an axial relative position in which in each case webs (20) generated by corresponding parallel wires (15) on opposite sides of the strip shaped template are brought into coincidence and subsequently, in the condition of lying upon one another, are guided as an altogether continuous wave winding (14) into the stator-grooves or rotor-grooves in a direction perpendicular to their longitudinal extension.

2. Method according to claim 1, **characterised in that** each of the two wire strands (10, 12) respectively interwoven, has two to five times as many webs (20) as the stator or rotor has grooves and the intertwined and interwoven wire strands (10, 12) between the respectively second and penultimate webs (20) are continuously formed and joined together such that the winding heads (22) of two wires (15) which are destined for the same grooves in each case in the progression from one groove to the next cross each other in the projection onto a surface lying perpendicularly to the longitudinal direction of the grooves.

3. Method according to claim 1, **characterised in that** the interwoven wire strands (10, 12) are pressed flat individually or after they are wound to form the continuous wave winding (14).

4. Method according to claim 3, **characterised in that** the interwoven wire strands (10, 12) are pressed together flatly only insofar as in an end view of the extended wire strands (10, 12) two webs (20) connected by a winding head (22) lie next to one another without or with a minimal interspacing.

5. Method according to any of claims 1 to 4, **characterised in that** the wire strands (10, 12) are formed from parallel evenly oriented wires (15) having rectangular cross-section and are woven, wherein during the work step A the wires (15) are laid with one of their side surfaces onto the template and are bent by 180° about a first bending axis lying parallel to the middle longitudinal axis of the template to form head portions and the flanks thus formed are bent during the work step B in the region of this bending and at the ends of the head portions respectively about bending axes lying perpendicularly to the first bending axis, such that in the side view of the strip-shaped template gable-shaped winding heads (22) are formed.

6. Method according to claim 5, **characterised in that** rectangular wires (15) are used, the breadth of which measured in longitudinal direction of the template is selected, considering groove installations and/or wire insulations and a play necessary for the introduction of the wires (15) into the grooves, such that it matches the groove breadth.

7. Cylindrical stator or rotor of an electrical machine having grooves of which the breadth is designed for the reception of one single row of wire webs (20) being rectangular in cross-section and oriented with their radially inner and outer lateral surfaces, and having a distributed wave winding (14) which has two strands (10,12) having in each case n wires (15) formed in a continuous wave shape having webs (20) and gable-shaped winding heads (22) and interwoven, wherein the strands (10, 12) of the wave winding (14) have been generated in a continuously even manner with the respectively n wires (15) having the webs (20) and winding heads (22) by means of winding on a strip-shaped flat template, and the wires (15) of the one strand (10) are assigned to the wires (15) of the other strand (12) in each case in pairs such that the two wires (15) of each pair lie in the same grooves and their winding heads (22) connect opposite ends of the adjacent webs (20) lying in the same grooves, wherein the two wire strands (10, 12) are wound in a relative position about one another in which the webs (20) of the wires (15) assigned in pairs assume in the grooves respectively occupied by them and following one on the other in turn the radially outer and the radially inner position, **characterised in that** the wires (15) are bent about 180° at the tips (23) of the gable-shaped winding heads (22) with regards to the cylinder axis outwardly or inwardly, such that the deformation at the tip of the winding head (22) is so is strong that the wire is plastically deformed and retains its shape after the bending, and additionally the two flanks of the winding heads (22) corresponding to their spreading are bent in opposite circumferential direction such that opposite lateral surfaces of a wire (15) form the axially outer surface of a winding head (22) and in axial top view onto a winding head (22) the two adjoining webs (20) assume in their respective grooves radially different positions.

8. Rotor or stator according to claim 7, **characterised in that** the wires (15) assigned in pairs extend at least twice about the circumference of a stator or rotor and in this regard form in the grooves, directly adjoining, more than one two-layered layer, and that also in the region of a transition from one to the next layer the web (20) of the two wires (15) assigned in pairs assume in the grooves following one after another alternatingly a position lying further to the inside and further to the outside, such that the two winding heads (22), which connect the opposite ends of the webs (20) lying in two grooves following one another, cross in a projection onto a surface situated perpendicularly to the middle longitudinal axis of the stator or rotor.

9. Stator or rotor according to claim 7 or 8, **characterised in that** the two wire strands (10, 12) match in the length and shape of the waves and are woven by means of mutual winding in the relative position in which the ends of the wires (15), assigned in pairs, have the smallest spacing on the same end face of the stator or rotor.

## Revendications

1. Procédé de fabrication d'un stator ou rotor pour des machines électriques avec un enroulement ondulé réparti, dont les fils (15) sont formés en continu de manière ondulée en têtes de bobine (22), reliant des nervures (20) introduites dans les gorges du stator ou rotor et respectivement deux nervures (20) voisines d'un fil (15), faisant saillie d'une face frontale du stator ou rotor, dans lequel les têtes de bobine (22) de respectivement deux fils (15) associés par paires, situés avec des nervures (20) voisines dans les mêmes gorges, font saillie, aux extrémités opposées des gorges, des faces frontales du stator ou rotor, **caractérisé en ce que**, pour la formation de deux faisceaux de fils (10, 12) tressés tout d'abord sur eux-mêmes puis entre eux, respectivement
- plusieurs enroulement de bobine sont produits simultanément par enroulement de n fils (15) parallèles, dévidés par un guide-fil, avec un écart intermédiaire sur un gabarit en forme de bandeau pouvant être amené en rotation autour de son axe longitudinal, par le fait que
- pour un stator ou rotor avec un nombre pouvant être divisé par 2 n de gorges à garnir avec l'enroulement ondulé, dans une étape de travail A, respectivement une nervure (20) et une section de tête, doublée par repliement, avec la longueur de fil d'une tête de bobine (22), sont produites en alternance à partir de chacun des fils (15) parallèles sur le gabarit avec un écart intermédiaire prédéfini correspondant à l'écart des gorges de stator ou rotor et
- dans une étape de travail B, les nervures (20) formées dans l'étape de travail A, conjointement avec la première extrémité adjacente des sections de tête respectivement associées, avec maintien de leur écart intermédiaire, et le guide-fil, conjointement avec la seconde extrémité de ces sections de tête, sont déplacés axialement le long de l'axe de rotation du gabarit les uns par rapport aux autres de n fois l'écart intermédiaire prédéfini dans une direction prédéfinie et les têtes de bobine (22) sont ainsi formées,
- jusqu'à ce que, après avoir répété à plusieurs reprises les étapes de travail A et B, les nervures (20) pour les dernières n gorges de stator ou de rotor soient aussi produites sur le gabarit,
- puis les deux faisceaux de fils (10, 12) préfabriqués de manière individuelle, tressés entre eux, sont enroulés les uns sur les autres dans une position relative axiale, dans laquelle des nervures (20) produites respectivement par des fils parallèles (15) correspondants sur des côtés opposés du gabarit en forme de bandeau sont respectivement alignées et ensuite introduites dans les gorges du stator ou rotor dans une direction transversale à leur étendue longitudinale en tant qu'enroulement ondulé (14) d'un seul tenant dans l'état juxtaposé.

2. Procédé selon la revendication 1, **caractérisé en ce que** chacun des deux faisceaux de fils (10, 12) respectivement tressés sur eux-mêmes présente deux à cinq fois plus de nervures (20) que les gorges du stator ou rotor et les faisceaux de fils (10, 12) tressés sur eux-mêmes et entre eux sont formés et réunis d'un seul tenant entre les respectivement secondes et avant-dernières nervures (20), de telle sorte que les têtes de bobine (22) de deux fils (15), qui sont destinées à ces gorges, se croisent respectivement lors de la progression d'une gorge à la suivante dans la projection sur une surface située transversalement à la direction longitudinale des gorges.

3. Procédé selon la revendication 1, **caractérisé en ce que** les faisceaux de fils (10, 12) tressés sur eux-mêmes sont pressés à plat individuellement ou après leur vrillage en l'enroulement ondulé (14) d'un seul tenant.

4. Procédé selon la revendication 3, **caractérisé en ce que** les faisceaux de fils (10, 12) tressés sur eux-mêmes sont pressés ensemble à plat seulement dans la mesure où, dans une vue d'extrémité des faisceaux de fils (10, 12) étirés, deux nervures (20) reliées par une tête de bobine (22) se situent l'une à côté de l'autre sans ou avec écart intermédiaire minimal.

5. Procédé selon l'une quelconque des revendications 1 à 4, **caractérisé en ce que** les faisceaux de fils (10, 12) sont formés et tressés à partir de fils (15) à section transversale rectangulaire parallèles, orientés régulièrement, dans lequel, pendant l'étape de travail A, les fils (15) sont posés avec une de leurs surfaces latérales sur le gabarit et pliés de 180° par rapport aux sections de tête autour d'un premier axe de pliage situé parallèlement à l'axe longitudinal médian du gabarit et les branches formées à cette occasion sont pliées pendant l'étape de travail B dans la zone de cette pliure ainsi qu'aux extrémités des sections de tête respectivement autour d'axes de pliage situés transversalement au premier axe de pliage, de telle sorte que, dans la vue latérale du gabarit en forme de bandeau, des têtes de bobine (22) en forme de pignon sont formées.

6. Procédé selon la revendication 5, **caractérisé en ce que** des fils rectangulaires (15) sont utilisés, dont la largeur mesurée dans la direction longitudinale du gabarit est sélectionnée avec prise en compte d'isolations de gorge et/ou fil et d'un jeu nécessaire à l'introduction des fils (15) dans les gorges, de sorte qu'elle convient à la largeur de gorge.

7. Stator ou rotor cylindrique d'une machine électrique avec des gorges dont la largeur est configurée pour le logement d'une seule rangée de nervures de fil (20) rectangulaires en section transversale, orientées avec leurs surfaces latérales radialement intérieures et extérieures, et avec un enroulement ondulé (14) réparti, qui présente deux faisceaux (10, 12) avec respectivement n fils (15) tressés les uns avec les autres, formés en continu de manière ondulée avec des nervures (20) et des têtes de bobine (22) en forme de pignon, dans lequel les faisceaux (10, 12) de l'enroulement ondulé (14) ont été produits d'un seul tenant de manière régulière avec les respectivement n fils (15) avec les nervures (20) et têtes de bobine (22) par enroulement sur un gabarit plat en forme de bandeau et les fils (15) de l'un des faisceaux (10) sont associés aux fils (15) de l'autre faisceau (12) respectivement par paires, de telle sorte que les deux fils (15) de chaque paire se situent dans les mêmes gorges et que leurs têtes de bobine (22) relient des extrémités opposées des nervures (20) voisines, situées dans les mêmes gorges, dans lequel les deux faisceaux de fils (10, 12) sont enroulés l'un autour de l'autre dans une position relative, dans laquelle les nervures (20) des fils (15) associés par paires occupent alternativement la position radialement extérieure et la position radialement intérieure dans les gorges se succédant respectivement, garnies avec ceux-ci, **caractérisé en ce que** les fils (15) sont pliés de 180° vers l'extérieur ou l'intérieur par rapport à l'axe de cylindre au niveau des pointes (23) des têtes de bobine (22) en forme de pignon, de telle sorte que la déformation au niveau de la pointe des têtes de bobine (22) est si importante que le fil est déformé plastiquement et conserve sa forme après le pliage, et en outre les deux branches des têtes de bobine (22) sont pliées conformément à leur écartement dans des directions périphériques opposées, de telle sorte que les surfaces latérales opposées d'un fil (15) forment la surface axialement extérieure d'une tête de bobine (22) et, dans la vue en élévation axiale d'une tête de bobine (22), les deux nervures (20) adjacentes occupent dans leurs gorges respectives des positions radialement différentes.

8. Rotor ou stator selon la revendication 7, **caractérisé en ce que** les fils (15) associés par paires s'étendent au moins deux fois autour de la périphérie d'un stator ou rotor et forment dans ce cadre dans les gorges, de façon directement voisine, plus d'une couche bicouche, et que, également dans la zone d'une transition d'une couche à la suivante, les nervures (20) des deux fils (15) associés par paires occupent dans les gorges se succédant en alternance une position située plus à l'intérieur et plus à l'extérieur, de sorte que les deux têtes de bobine (22), lesquelles relient les extrémités opposées des nervures (20) situées dans deux gorges successives, se croisent dans une projection sur une surface située transversalement à l'axe longitudinal médian du stator ou rotor.

9. Stator ou rotor selon la revendication 7 ou 8, **caractérisé en ce que** les deux faisceaux de fils (10, 12) concordent dans la longueur et la forme des ondulations et sont tressés par enroulement mutuel dans la position relative dans laquelle les extrémités des fils (15) associés par paires présentent sur la même face frontale du stator ou rotor le plus petit écart.
